Europäisches Patentamt

European Patent Office

Office européen des brevets

(19)

(11) Publication number: **0 273 479**
**B1**

# EUROPEAN PATENT SPECIFICATION

(45) Date of publication of the patent specification:
09.05.90

(51) Int. Cl.⁵: **F16G 3/10**

(21) Application number: **87202278.5**

(22) Date of filing: **20.11.87**

(54) Spliced connection for a belt, belt, as well as method for manufacturing a spliced connection.

(30) Priority: **21.11.86  NL 8602968**

(43) Date of publication of application:
**06.07.88 Bulletin 88/27**

(45) Publication of the grant of the patent:
**09.05.90 Bulletin 90/19**

(84) Designated Contracting States:
**AT BE DE ES FR GB GR IT NL SE**

(56) References cited:
**EP-A- 0 158 426**
**EP-A- 0 185 006**
**EP-A- 0 220 756**
**DE-A- 2 644 454**
**DE-A- 2 916 253**
**FR-A- 2 109 325**
**US-A- 4 564 542**

(73) Proprietor: **DUNLOP-ENERKA B.V., Ollemolenstraat 2,
NL-9203 ZN Drachten(NL)**

(72) Inventor: **Wokke Eduard Andries, Fluessen 7, 9204 HR
Drachten(NL)**
Inventor: **De Vries Hans, Dollard 292, 9204 CZ
Drachten(NL)**

(74) Representative: **van der Beek, George Frans, Ir. et al,
Nederlandsch Octrooibureau Scheveningseweg 82 P.O.
Box 29720, NL-2502 LS 's-Gravenhage(NL)**

## Description

The present invention relates to a spliced connection of two end sections of a conveyor belt having a body proper with parallel reinforcing cords extending therethrough in the longitudinal direction of the belt, said spliced connection comprising aramide strands embedded in the belt body and extending parallel to the reinforcing cords across the splice line into both of said end belt sections.

Such a spliced connection is known from US-A 4 564 542. Therein material is removed at the belt extremities from belt body between the reinforcing cords. So opposedly arranged continuous grooves are provided, in which strips of connection material are introduced. This connecting material comprises longitudinal extending aramide members. By this a so called "finger connection" is obtained. This connection is realised in this way because according to the prior art one aims to arrange the aramide cords, realizing the connection, in the neutral line of the belt. This means one aims to arrange these cords substantially in the same plane as the reinforcing cords of the belt. This is clear that this spliced connection suffers from the draw back making it complicated to realize.

A further possibility could be removing of a part of the reinforcing cords, but, because a steel material is often used for this purpose difficulties are encountered being not solvable on manufacturing-technical level. Furthermore, the strength is affected by this.

The present invention aims to provide a spliced connection of the kind indicated above, which can be simpler realized, more particular wherein it is no longer necessary to produce grooves between the reinforing cords.

According to the invention this realized with said aramide strands having a considerable twist, such as with a tex $330 \times 3 \times 3$ cord a yarn twist of 130 t.p.m. and folding twist of 125 t.p.m. (turns per meter), and said strands being spaced in the direction perpendicular to the plane of the belt from the reinforcing cords. Surprisingly it was found that because of this considerably twisting of the aramide strand members, these are able to take up tensile, upsetting and bending loads outside of the neutral line without the related adverse consequences present with the known materials being applied in the ways known up till now. Using a yarn twist of 130 t.p.m. and a folding twist of 125 t.p.m. at a tex $330 \times 3 \times 3$ cord after testing it became clear that this material does not show tensile or compression fatique during dynamic loadings, such that it is particularly suited to be arranged according to subject invention outside of the plane of the reinforcing cords.

According to a further preferred embodiment groups of strand members are arranged in strips. By using strips it is simple to build a weld and easy adapting to different belt widths can be provided. However, it is emphasized that it is not aimed to realize with these strips a finger connection as according to the prior art.

According to a further preferred embodiment, if the belt comprises transverse cords, these cords are preferably removed at the ends, to provide room for the spliced connection according to the invention.

The invention also relates to a belt provided with the spliced connection as described above.

The spliced connection as described above can be realized by exposing the reinforcing cords at the extremities of the belt to be spliced arranging a sheet of rubber material at both sides of the exposed reinforcing cords, providing at least one side with the aramide strands, and arranging a cover layer at both sides after which the splice structure so formed is cured by a vulcanisation process. Exposing of the reinforcing cords does not comprise preparing of grooves between the reinforcing cords.

The invention will now be described with reference to an embodiment being only an example and shown in the drawing, in which:

Fig. 1 is a cross section through a conveyor belt at a splice and
Fig. 2 is a partially exploded plan view of this spliced connection.

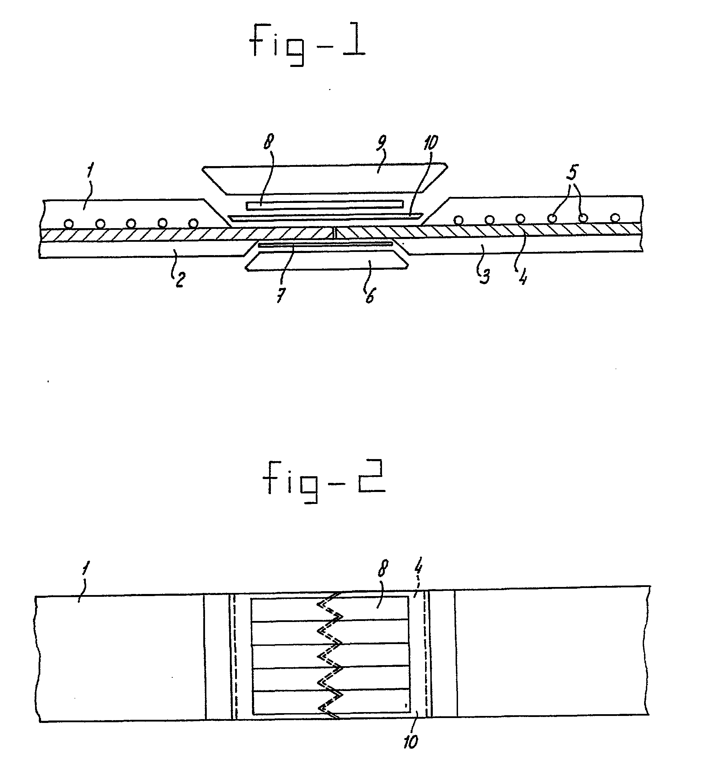

The conveyor belt 1 shown in Figures 1 and 2 has ends 2, 3 to be spliced together. In the conveyor belt longitudinal cords 4 as well as transverse cords 5 are provided. The spliced connection comprises from the lower part of Fig. 1 to its upper part, a lower cover layer 6, rubbered supporting fabric 7, and a skim 10, comprising a non-vulcanized rubber sheet as rubber adhering layer. The strength of the splicing connection is realized by the rubbered aramide cords 8 being subsequently arranged. After arranging of these layers 7, 10 or strips 8 a further layer of rubber 9 is provided.

By using of inert aramide cords, being possibly treated to preprocessing as described below, it can be prevented that attacking occurs during ingressing of substances being aggressive for steel and such, by which the mechanical properties of the spliced connection deteriorate. To be able to use the belt with compression loading, occurring mostly when the belt is guided around a relatively small during light loading of the belt, the aramide material is used in a special way. It has been found that a $330 \times 3 \times 3$ tex cord having a yarn twist of 130 t.p.m. and a folding twist of 125 t.p.m., i.e., a cord screw angle of 26,5°, functions very well. Such a considerable twist can be arranged with aramide cord, however, not with steel wire, such that a belt is obtained being also advantageously unsable in non-corrosive surroundings.

For adhering of the aramide material to the rubber a usual method can be applied. This method can for instance comprise immersing of the aramide cord as preprocessing in an epoxy precoat, followed by immersing in a standard resorcinol-formaldehyde dip (RFL). Decreasing of the tension of the surrounding rubber, if the longitudinal wire material has a high modulus (such as steel) can be realized by increasing of the modulus of the cord. To obtain this the aramide cord was dried after immersing in epoxy precoat during 1,5 minutes under a tension of 30 kgs at 245°C. By this the preference orientation of the aramide cord, which can be lost at such high temperatures, is maintained. After this the RFL dip being applied was dried under the force of 10 kg at 180°C during 1,5 minutes. If rubber is subsequently applied, it is able to adhere very well by the applied dip.

To illustrate the improved compress fatigue obtained by use of the aramide material, tests have been executed using as splicing material both aramide material and steel cord. Therefrom it became clear that the most considerable compression by a spliced connection will occur at a belt having a low strength, for instant conveyor belt ST 500, surrounding at a relatively light loading a relatively small pulley with a diameter of for instance 250, wherein the direction of bending is opposite to that at both end drums of the conveyor belt device. For simulating such a device, an arrangement is used as known from EP-A 0 220 756. Using such an arrangement these conditions were approached by bending of the split connection, comprising 30 cords at 30 kg around a 280 mm drum. The length of the splice in this arrangement was such that all of the divided length was moved through the bending area, whereby two bends resulted in one cycle of the arrangement. This test was also effected at a spliced connection according to the prior art provided with steel strips in a conveyor belt. Because with this last embodiment already after $1,8 \times 10^6$ bends fracture of the rubber occured, the testing of both samples was ended after that number of loadings. The spliced connection were carefully examined. The results of the compression fatigue tests are indicated below in table A.

Table A

|  | Strength in Newton | Scatter of the measured values | Number of measured values | % loss in strength |
|---|---|---|---|---|
| aramide cord-initial value | 4160 | 4000–4316 | 6 | – |
| aramide cord after $1,8 \times 10^6$ bends | 4190 | 4070–4280 | 7 | 0 |
| steel cord-initial value | 4150 | 3990–4200 | 6 | – |
| steel cord after, $1,8 \times 10^6$ bends | 660 | 0–1360 | 6 | 84 |

From this table it is clear that a spliced connection having the aramide cord according to the invention shows considerably improved properties with regard to a connection wherein steel material as usual (Fig. 2) is used. Examination of the fracture face of the steel cords showed that fracture occured at the points where change of tension was at its maximum.

After this the fatigue strength was examined during tensile loading. The most severe bending loading at tensile is experienced when a heavy belt, for instance an ST1600 conveyor belt, runs at considerable loading (10% of the fracture loading, i.e. 40 kg/cord) around a very large drive drum such as 800 mm. From a practical point of view in this test a ST 1200 belt was used bending around a 600 mm drum at a tension of 30 kg/cord.

During testing of the spliced connection with aramide after $2,0 \times 10^6$ cycles results were obtained as described in table B below.

Table B

|  | Strength in Newton | Scatter of the measured values | Number of measured values | % loss in strength |
|---|---|---|---|---|
| aramide cord-initial value | 2160 | 4000–4316 | 6 | – |
| aramide cord after $2,0 \times 10^6$ bends | 3970 | 3870–4070 | 6 | 5 |

From above tests it is obvious that the compression test of the spliced connection is not decreasing whilst the tensile strength only 5% decreases after above fatigueing.

To adhere several layers to each other, for strenghtening the splice, usual adhering means or vulcanisation can be applied.

3

## Claims

1. Spliced connection of two end sections (2, 3) of a conveyor belt (1), having a body proper with parallel reinforcing cords (4) extending therethrough in the longitudinal direction of the belt (1), said spliced connection comprising aramide strands (8) embedded in the belt body and extending parallel to the reinforcing cords (4) across the splice line into both of said end belt sections (2, 3), characterized in that, said aramide strands (8) have a considerable twist, such as with a tex 330 × 3 × 3 cord a yarn twist of 130 t.p.m. and folding twist of 125 t.p.m. (turns per meter), and said strands (8) being spaced in the direction perpendicular to the plane of the belt from the reinforcing cords (4).

2. Spliced connection according to claim 1, wherein groups of strands (8) are arranged in strips.

3. Spliced connection according to one of the preceding claims, wherein the belt (1) comprises transverse cords (5), which the transverse cords (5) are removed at the place of the strands (8).

4. Belt provided with a spliced connection according to one of the preceding claims.

5. Method for manufacturing a spliced connection according to one of the claims 1–3, comprising the following steps: exposing the reinforcing cords (4) at the extremities (2, 3) of the belt (1) to be spliced; arranging a sheet (7, 10) of rubber material at both sides of the exposed reinforcing cords (4); providing at least one side with the aramide strands (8); and arranging a cover layer (9, 6) at both sides after which the splice structure so formed is cured by a vulcanization process.

## Revendications

1. Jonction par épissure de deux sections d'extrémité (2, 3) d'une courroie de convoyeur (1) comportant un corps avec des cordes de renforcement parallèles (4) s'étendant à travers lui dans la direction longitudinale de la courroie (1), ladite jonction par épissure comprenant des cordons aramide (8) noyés dans le corps de la courroie et s'étendant parallèlement aux cordes de renforcement (4) en travers de la ligne d'épissure dans lesdites deux sections d'extrémité de courroie (2, 3), caractérisé par le fait que lesdits cordons aramide (8) possèdent une torsion considérable, notamment avec une corde 330 × 3 × 3 tex une torsion de fil de 130 t.p.m. et une torsion de pliage de 125 t.p.m. (tours par mètre), lesdits cordons (8) étant espacés dans la direction perpendiculaire au plan de la courroie par rapport aux cordes de renforcement (4).

2. Jonction par épissure selon la revendication 1, dans laquelle des groupes de cordons (8) sont disposés en bandes.

3. Jonction par épissure selon l'une des revendications précédentes dans laquelle la courroie (1) comporte des cordes transversales (5), ces cordes transversales (5) étant enlevées à l'emplacement des cordons (8).

4. Courroie pourvue d'une jonction par épissure selon l'une des revendications précédentes.

5. Procédé pour réaliser une jonction par épissure selon l'une des revendications 1 à 3, comprenant les étapes suivantes: dénuder les cordes de renforcement (4) aux extrémités (2, 3) de la courroie (1) destinées à être reliées par épissure; disposer une feuille (7, 10) d'un matériau caoutchouté des deux côtés des cordes de renforcement dénudées (4); munir au moins un côté des cordons aramide (8); et disposer une couche de recouvrement (9, 6) des deux côtés, après quoi la structure d'épissure ainsi formée est durcie par un processus de vulcanisation.

## Patentansprüche

1. Gespleisste Verbindung von zwei Endteilen (2, 3) eines Förderbandes (1), das einen Körper mit zugehörigen parallelen Armierungssträngen (4) hat, die durch diesen in Längsrichtung des Bands (1) verlaufen, wobei die gespleisste Verbindung Aramidstränge (8) aufweist, die in den Bandkörper eingebettet sind und parallel zu den Armierungssträngen (4) über die Spleissungslinie hinweg in die beiden Bandendteile (2, 3) verlaufen, dadurch gekennzeichnet, daß die Aramidstränge (8) eine beträchtliche Drehung, wie bei einem Strang von tex 330 × 3 × 3 eine Garndrehung von 130 Drehungen pro Meter und eine Faltdrehung von 125 Drehungen pro Meter hat, und daß die Stränge (8) in der Richtung senkrecht zu der Bandebene von den Armierungssträngen (4) einen Abstand haben.

2. Gespleisste Verbindung nach Anspruch 1, bei der Gruppen von Strängen (8) in Streifen angeordnet sind.

3. Gespleisste Verbindung nach einem der vorangehenden Ansprüche, bei der das Band (1) Querstränge (5) aufweist, wobei die Querstränge (5) an der Stelle der Stränge (8) entfernt sind.

4. Band, das mit einer gespleissten Verbindung nach einem der vorangehenden Ansprüche versehen ist.

5. Verfahren zum Herstellen einer gespleissten Verbindung nach einem der Ansprüche 1 bis 3, welches die folgenden Schritte aufweist: Freilegen der Armierungsstränge (4) an den Enden (2, 3) des zu spleissenden Bandes (1); Anordnen eines Flächenstücks (7, 10) aus Kautschukmaterial an den beiden Seiten der freigelegten Armierungsstränge (4); Versehen von wenigstens einer Seite mit den Aramidsträngen (8); und Anordnen einer Deckschicht (9, 7) an beiden Seiten, wobei anschließend die so gebildete Spleissanordnung mittels eines Vulkanisierungsverfahrens vulkanisiert wird.

# Fig-1

# Fig-2